Europäisches Patentamt

European Patent Office

Office européen des brevets

(19)

(11) Publication number: **0 000 104**
**A1**

(12) **EUROPEAN PATENT APPLICATION**

(21) Application number: **78300038.3**

(22) Date of filing: **13.06.78**

(51) Int. Cl.²: **G 02 F 1/33**

(30) Priority: **13.06.77 US 806205**

(43) Date of publication of application:
**20.12.78 Bulletin 78/1**

(84) Designated Contracting States:
**CH DE FR GB NL**

(71) Applicant: Eastman KODAK COMPANY,
343 State Street,
Rochester, New York 14650 (US)

(72) Inventor: Howe, Dennis George,
10 Henley Place,
Fairport, New York (US)

(72) Inventor: Blazey, Richard Nelson,
91 Longsworth Drive,
Rochester, New York (US)

(72) Inventor: Owens, James Carl,
3 Woods End,
Pittsford, New York (US)

(74) Representative: Trangmar, Leigh Alan,
P.O. Box 114 246 High Holborn,
London WC1V 7EA (GB)

(54) Optically achromatized acoustooptic deflection apparatus.

(57) An optically achromatized acoustooptic deflection apparatus.

Acoustooptic deflectors scan light through a scan angle which is a direct function of wavelength. In multicolor systems, the scan angles must be equalized.

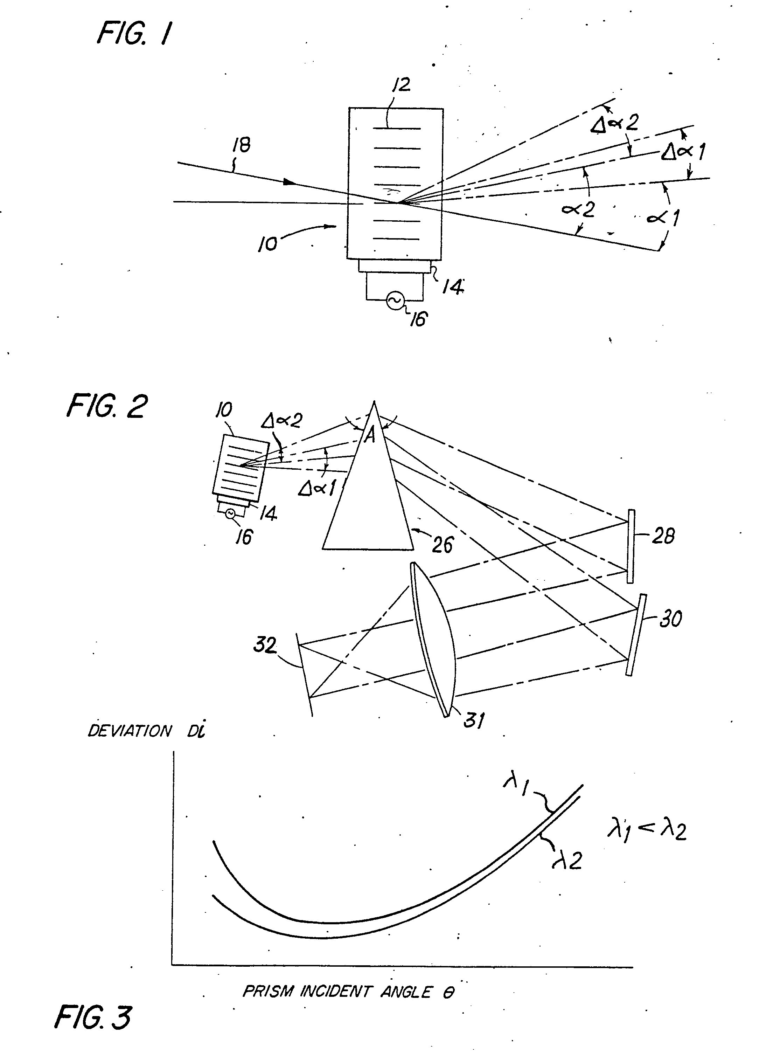

According to the invention, equalization is accomplished by one prism (26, Figure 2) or more prisms which magnify the scan angles by an amount which is an inverse function of the specific wavelengths involved. At least two beams are passed through the same prism so that the beams do not have to be separated to equalize the scan angles. The prism can also provide separation of the beams for insertion of optical elements in separate beams.

Croydon Printing Company Ltd.

## OPTICALLY ACHROMATIZED ACOUSTOOPTIC DEFLECTION APPARATUS

### TECHNICAL FIELD

This invention relates to acoustooptic light deflection apparatus. More particularly it relates to apparatus for deflecting two or more beams of light of different wavelength through substantially the same scan angle.

### BACKGROUND ART

It is well known that the passage of acoustic waves through a transparent medium produces a diffraction grating by periodic variation of the index of refraction of the medium. Light directed through the medium, or cell, is diffracted through a diffraction angle $\alpha$, between the undiffracted and diffracted beams, according to the following formula:

$$\alpha \simeq \lambda f/v \qquad (1)$$

for small values of $\alpha$ and where $\lambda$ is the vacuum wave length of the light, $f$ is the frequency of the acoustic wave, and $v$ is the acoustic velocity. In acoustooptic deflectors, light is deflected or scanned through a scan angle $\Delta\alpha$ by varying the acoustic frequency $f$.

However, it can be seen that equation (1) defines a different angle $\alpha$ for each wavelength subjected to the same acoustic wave. If frequency $f$ is continuously varied through a bandwidth $\Delta f$, light beams of different wavelength will scan through different scan angles according to

$$\Delta\alpha = \lambda\Delta f/v \qquad (2)$$

These characteristics are illustrated in Fig. 1. A conventional diffraction cell 10 contains acoustic waves 12 of frequency $f_1$ produced by a transducer 14, which is in turn energized by a signal source 16. Two beams of light having wavelengths $\lambda_1$ and $\lambda_2$ where $\lambda_1 < \lambda_2$ travel along a path 18, enter the cell 10 and are diffracted by the acoustic wavefronts. Since the angle of diffraction is a function of optical wavelength, the light of each wavelength exits at different respective diffraction angles $\alpha_1$ and $\alpha_2$.

If the frequency of acoustic waves 12 is changed from $f_1$ to a higher frequency $f_2$, the diffraction angles will change in accordance with equation (2) by $\Delta\alpha_1 \ne \Delta\alpha_2$, respectively, where $\Delta\alpha_1 < \Delta\alpha_2$. Thus, it is apparent that even if the diffraction paths of the two wavelengths could be made co-linear at one chosen frequency, such as, for example, by impinging beams of different wavelengths at different respective incident light angles, they would not remain co-linear as the frequency is varied.

In their article "Equalization of Acoustooptic Deflection Cells in a Laser Color TV System", Applied Optics, Vol. 9, No. 5, May 1970, W. H. Watson and A. Korpel suggest the use of an acoustooptic deflector in a three color laser television apparatus. They recognize that the dispersive characteristics of acoustooptic deflection require some form of electrical or optical compensation before three primary color images will remain in register as the acoustic frequency is varied over a bandwidth $\Delta f$. Electrical compensation requires different acoustic signals for each beam, thereby apparently requiring a separate acoustooptic cell for each beam. Watson and Korpel optically equalize the scan angles using separate compensating prisms to magnify the smaller blue and green scan angles to match the scan angle of the red beam.

The optical solution suggested by Watson and Korpel requires different prisms for different beams. This requires spatially separate beams. Watson and Korpel provide spatially separate beams by using three separate acoustooptic deflectors driven by the same signal.

## DISCLOSURE OF THE INVENTION

It is the object of the invention to equalize the scan angles of two or more acoustooptically deflected beams using an optical means without the need of spatially separating the beams prior to the optical means. With this invention a single acoustooptic deflector can be used to deflect two or more beams while the prior art uses separate deflectors for each beam.

This object is accomplished by provision of prism means positioned in the path of both beams which prism means magnifies the scan angles of both beams by an amount which is an inverse function of the wavelengths of the beams.

According to a preferred embodiment of the invention, a single prism having indexes of refraction $n_1$ and $n_2$ for the wavelengths in question and an apex angle A is positioned with the deflected light beams incident on its front surface at approximately the same incident angle $\Theta$. The parameters $n_1$, $n_2$, A and $\Theta$ are chosen so that the product of the wavelength and the magnification of scan angle of one beam is equal to that of the other beam.

According to a further preferred embodiment a single prism is used to equalize the scan angles for three light beams of different wavelength, by proper choice of $n_1$, $n_2$, $n_3$, A and $\Theta$.

Even if the light beams are eventually separated, for example, to insert other optical elements to equalize the diffraction angles, it is an advantage of the invention that the prism means provides such separation or greatly shortens the optical path necessary for such separation. Therefore, according to another embodiment, three beams of different wavelength are passed through a single prism which equalizes the scan angle of two of the beams and contributes to the separation of the third beam from the first two. The scan angle of the third beam is equalized with the first two by further magnifying its scan angle with a second prism positioned only in the third beam.

## BRIEF DESCRIPTION OF THE DRAWINGS

In the description of the embodiments of the invention presented below, reference is made to the accompanying drawings in which:

Fig. 1 is a schematic representation first referred to above, of two light beams of different wavelength passing through a diffraction cell, with greatly exaggerated scan and diffraction angles;

Fig. 2 is a schematic view of an optical achromatization system according to the invention, with greatly exaggerated scan and diffraction angles;

Fig. 3 is a plot of light deviation of a prism vs. incident angle;

Fig. 4 is a plot of scan angle magnification of a prism vs. prism apex angle;

Fig. 5 is a plot of scan angle magnification of a prism vs. incident angle;

Fig. 6 is a plot of the magnification ratios of a prism for two optical wavelengths vs. incident angle; and

Fig. 7 is a schematic view of an optical achromatization system according to another embodiment of the invention, with greatly exaggerated scan and diffraction angles.

## DETAILED DESCRIPTION OF EMBODIMENTS

Acoustooptic deflectors normally function at very small scan and diffraction angles, for example, less than $1^{\circ}$ in each case. However, these angles are shown much greater than this in the drawings for illustrative purposes.

Referring to Fig. 2, a schematic representation of light deflector apparatus, constructed in accordance with the present invention, is shown. Diffraction cell 10 is identical to that shown in Fig. 1, described above. As in

Fig. 1, **the scan angles of beams exiting from cell 10 vary in direct proportion with wavelength.** The apparatus is optically achromatized by prism means, for example, single prism 26 positioned in the path of the deflected beams to differentially magnify and thus equalize the scan angles of the different wavelength light. A pair of centering mirrors 28 and 30 realign the beams so that all rays impinging upon an imaging lens 31 at any instant are parallel. The lens focuses the parallel beams to a point at plane 32, which point varies according to the scan angle.

The parameters of prism 26 are selected in accordance with the present invention so that the scan angle $\Delta \alpha$ of each beam is magnified by an amount necessary to equalize the scan angles of the two beams. In the following sections of this specification, we will discuss those parameters which affect scan angle magnification and how such parameters are used to achromatize the beams.

Because the prism means is placed in the path of both beams, it is not necessary to spatially separate the beams prior to entering the prism as in the prior art. However, an advantage of the invention is that the prism greatly shortens the path required to separate the beams for optical elements such as centering mirrors 28 and 30. In fact, if the scan angles of the original diffracted beams overlap and emanate from the same point in cell 10, they will never separate without the prism or other optical elements.

Scan Angle Magnification

The angle between the path of the incident and emergent rays of a light beam passing through a prism is the angle of deviation D. The amount of deviation is dependent upon the index of refraction n of the prism material for the particular wavelength, the apex angle A of the prism and the incident angle $\theta$ (the angle between the incident light beam and the normal to the incident prism face). The relationship between these parameters is:

$$D = \theta - A + \sin^{-1}[(n^2 - \sin^2\theta)^{1/2}\sin A - \cos A \sin\theta] \qquad (3)$$

From equation (3), it is seen that, for a given prism and wavelength, deviation of a light beam is a function solely of the incident angle $\theta$. Fig. 3 is a typical plot for two different optical wavelengths $\lambda_1$ and $\lambda_2$ of deviation versus incident angle. Note that as the angle of incidence is, say, decreased from a large value (moving from right to left), the angle of deviation decreases at first and then increases. The angle of minimum deviation $D_m$ is related to the apex angle of the prism and its index of refraction as discussed in Sears and Zemansky, University Physics, 2nd Edition, Addison-Wesley Publishing Company, page 736.

The magnification M of the prism at any value of incident angle $\theta$ is equal to the slope $dD/d\theta$.

Of course, the change in incident angle $\Delta\theta$ of a beam arriving at a prism face from an acoustooptic deflector cell as in Fig. 2 is linearly related to the change $\Delta\alpha$ in the diffraction angle $\alpha$ of the cell. From equation (2), the scan angles $\Delta\alpha_1, \Delta\alpha_2, \ldots, \Delta\alpha_n$ corresponding to light of wavelengths $\lambda_1, \lambda_2, \ldots \lambda_n$ are directly proportional to wavelengths. Mathematically, such a relationship can be expressed as follows:

$$\frac{\Delta\alpha_1}{\lambda_1} = \frac{\Delta\alpha_2}{\lambda_2} = \ldots = \frac{\Delta\alpha_n}{\lambda_n}$$

Accordingly, if the scan angles $\Delta\alpha_i$ (where i is any integer) are multiplied by a factor $M_i$ which is constant over the scan angle $\Delta\alpha_i$ and inversely proportional to the associated optical wavelength, the resulting scan angles would all be the same. Another way to express the same relationship is:

$$\Delta\alpha_1 M_1 = \Delta\alpha_2 M_2 = \ldots = \Delta\alpha_n M_n$$

where $M_i = M_1, M_2, \ldots, M_n$, and $M_i = constant/\lambda_i$.

From this relationship and from Fig. 3 it can be deduced that a prism is one device wherein magnification varies inversely with wavelength. That is, the prism magnification M can be greater for shorter optical wavelengths. In the region to the left of the point of minimum deviation in Fig. 3, the slope for the shorter wavelength $\lambda_1$ is more negative than that for the longer wavelength $\lambda_2$. Unfortunately, the relationship is not linear. However, if specific values for the parameters can be found where the relationship holds for two or more specific wavelengths, very close achromatization over small diffraction and scan angles can be effected.

## Selection of Apex Angle

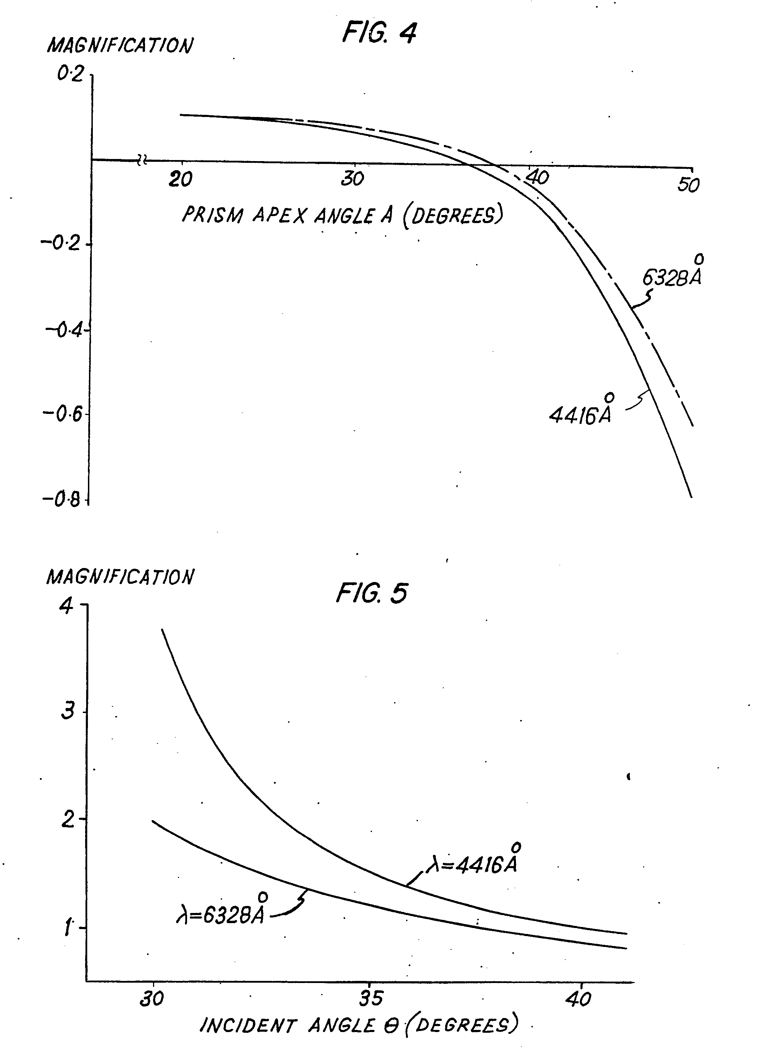

Deviation as a function of the apex angle can be computed from equation (3) for a given prism material and a fixed incident angle $\theta$. In fig. 4, magnification $(dD/d\theta)$ is plotted against apex angle for red and blue light beams (respective wavelengths of 6328Å and 4416Å) at an incident angle of $35°$; using a prism having an index of refraction $N_D = 1.68893$ and a dispersive index $V_D = 31.08$.

For large apex angles, the absolute magnitude of the scan angle magnification increases as wavelength decreases, a desirable effect to compensate for the differences in scan angles $\Delta\alpha_1$ from acoustooptic cell 10. Thus, in order to obtain prism magnifications that are an inverse function of a wide range of optical wavelengths, we must choose relatively large prism apex angles.

However, as the apex angle gets larger, the critical angle will eventually be reached for the blue beam. Therefore, the chosen apex angle cannot be so large that any light beam will suffer total internal reflection within the prism.

## Incidence Angle for Two Color Scan Equalization

Once a prism apex angle is chosen, the relative magnification can be adjusted to the desired value by choosing the appropriate angle of incidence θ. Acoustooptic deflectors commonly function at very small scan and diffraction angles. For example, both angles may be less than $1°$.

For this reason, a single angle $\Theta$ is used for all wavelengths in determining prism parameters and orientation.

If the angle $\Theta$ varies substantially between beams, then allowance for such variance must be made, which allowance is within the skill of the art.

Fig. 5 shows a pair of plots of magnification versus incident angle for a $40^\circ$ apex angle prism having indexes of refraction $n_1$ and $n_2$ of 2.08537 and 2.16790 for red ($\lambda_1 = 6328 \overset{o}{A}$) and blue ($\lambda_2 = 4416 \overset{o}{A}$) respectively. It can be shown that at $\Theta = 32^\circ$, $M = $ constant $/\lambda$ for the red (6328 $\overset{o}{A}$) and blue (4416 $\overset{o}{A}$) lines for such a prism. Thus, there is an incident angle at which the magnification will be inversely proportional to the optical wavelengths 6328 $\overset{o}{A}$ and 4416 $\overset{o}{A}$ for that particular prism.

In determining the incident angle at which the desired relationship between magnification and wavelength exists, we define $R_{ij} \equiv M_i/M_j$, where $i$ and $j$ are integers. If only two colors $\lambda_1$ and $\lambda_2$ are to be deflected, achromatization will be achieved where $M_1\lambda_1 = M_2\lambda_2$, or $R_{12} = \lambda_2/\lambda_1$.

Consider the three wavelengths $\lambda_1 = 6328 \overset{o}{A}$, $\lambda_2 = 4416 \overset{o}{A}$, $\lambda_3 = 5210 \overset{o}{A}$. For the pair $\lambda_1$ and $\lambda_2$, or the pair $\lambda_3$ and $\lambda_2$, respectively we require that:

$$R_{12} \equiv \frac{M_1}{M_2} = \frac{\lambda_2}{\lambda_1} = 0.6979 \qquad (6)$$

and

$$R_{32} \equiv \frac{M_3}{M_2} = \frac{\lambda_2}{\lambda_3} = 0.8476 \qquad (7)$$

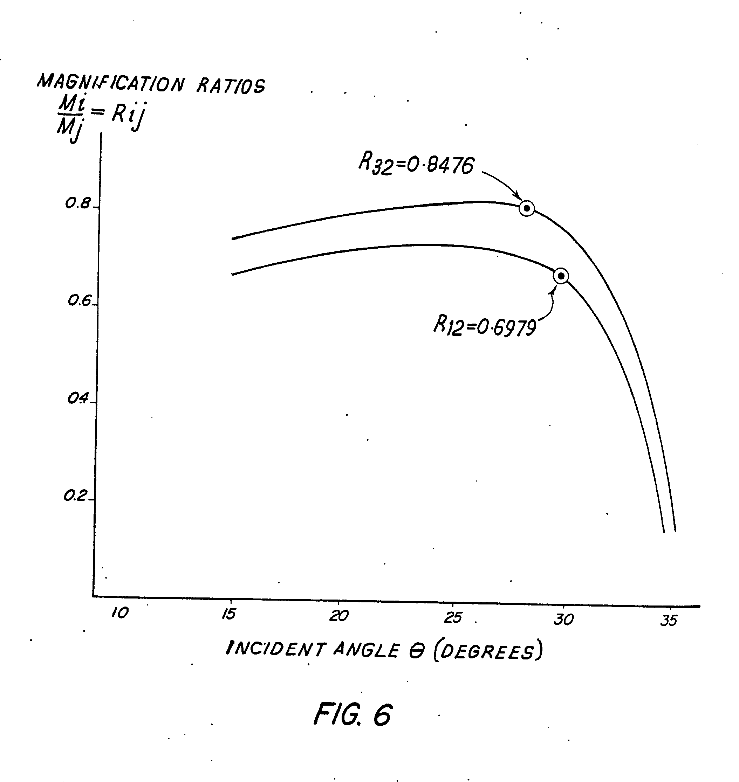

In Figure 6, computed magnification ratios $\frac{M_i}{M_j}$, or $R_{ij}$, are plotted vs. prism incident angle $\Theta$ for a prism of the same glass as in Fig. 5 ($n_3 = 2.11493$) with $30^\circ$ apex angle for the three optical wavelengths $\lambda_1 = 6328 \overset{o}{A}$, $\lambda_2 = 4416 \overset{o}{A}$ and $\lambda_3 = 5210 \overset{o}{A}$. The circled points indicate those incidence angles at which the condition of either equation (6) or (7) is fulfilled, i.e., where $R_{ij}$ = $\lambda_j/\lambda_i$ ($R_{12}$ = 0.6979 and $R_{32}$ = 0.8476). Thus, if one uses this prism at an incident angle of 29.6°, scan equalization is achieved for the two colors $\lambda_2$ = 4416 Å and $\lambda_1$ = 6328 Å. Similarly, achromatization of the scans of the two colors $\lambda_3$ = 5210 Å and $\lambda_2$ = 4416 Å is achieved by choosing $\theta$ = 28.0°. Of course, as the deflection angle $\alpha$ varies over a range $\Delta\alpha$, the incidence angle $\theta$ will vary over a corresponding range $\Delta\theta$, and optimum performance will result if the change in $R_{ij}$ in Fig. 6 is as small as possible over

the range $\Delta\theta$. Two color achromatization holds over a larger scan range $\Delta\alpha$ in the case of the upper curve since the slope of that curve at $\theta$ = 28.0° is smaller than the slope of the lower curve at $\theta$ = 29.6°. Perfect two color achromatization over the entire scan range requires that the change of $R_{ij}$ be zero over the range of values $\Delta\theta$ corresponding to the scan range of $\Delta\alpha$.

Three Color Achromatization By Choice of Wavelengths

If the two circled points in Figure 6 were vertically aligned, i.e., if both equations (6) and (7) were satisfied at a single $\theta$ value, then at that value of $\theta$, $M_1$ = constant/$\lambda_1$, or

$$M_1\lambda_1 = M_2\lambda_2 = M_3\lambda_3 = K \qquad (8)$$

There are several ways this can be done. One way consists of choosing the third wavelength $\lambda_3$ to fit the achromatization conditions of the other two wavelengths. For example, when equation (6) is satisfied, $R_{12}$ = 0.6979 for $\lambda_2$ = 4416 Å and $\lambda_1$ = 6328 Å, and from Fig. 6, this is true at $\theta$ = 29.6°. However, for the $\theta$ value 29.6°, $R_{32}$ = 0.8050 and does not satisfy equation (7) with $\lambda_2$ = 5210 Å.

We can use equation (7) to find a value for $\lambda_3$ at $\theta$ = 29.6°. Letting $R_{32}$ = 0.8050 and $\lambda_2$ = 4416 Å, equation (7) can be solved for $\lambda_3$; and we have $\lambda_3$ = $\lambda_2 R_{32}$ = 5486 Å. Thus, if $R_{32}$ did not change with the change in $\lambda_3$, simply changing from $\lambda_3$ = 5210 Å to $\lambda_3$ =

5486 Å would accomplish three color achromatization. Of course, changing $\lambda_3$ does make a slight shift in the upper curve of Fig. 6 and thus an iterative process of solving for $\lambda_3$, plotting $R_{32}$, solving for a new $\lambda_3$, etc., must be followed to approximate the correct value of $\lambda_3$.

## Three Color Achromatization By a Trimming Prism

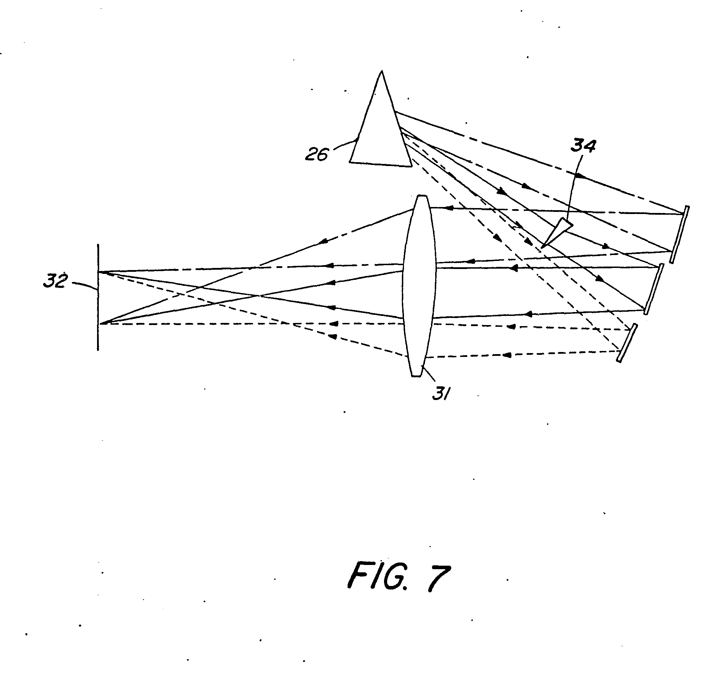

Another technique, which does not require changing the wavelength of any beam, is shown in Fig. 7. A second "trimming" prism 34 has been used to compensate for the horizontal distance between the circled points in Figure 6 by providing an additional control on the magnification for one wavelength. Essentially, this involves separating one of the three beams for individual magnification. A prism operating near normal incidence ($\theta$ = O) has a magnification $M_o$ given by

$$M_o = \frac{\cos A}{(1-n^2\sin^2 A)^{1/2}} \qquad (9)$$

Solving for apex angle A,

$$A = \sin^{-1}\left(\frac{M_o^2-1}{M_o^2 n^2-1}\right)^{1/2} \qquad (10)$$

Calculating as an example the value of A for a correcting prism needed in the example of Figure 6, we remember that at $\theta$ = 29.6° (the incident angle $\theta$ which provides scan equalization for wavelengths $\lambda_1$ 6328 Å and $\lambda_2$= 4416 Å), the magnification ratio $R_{32}$ must be 0.8050 to equalize the scan of a third wavelength $\lambda_3$. For two color scan equalization with $\lambda_3$ = 5210 Å and $\lambda_2$ = 4416Å it has been shown that $R_{32}$ must equal 0.8476.

Hence, we see that we can have three color scan equalization without changing the optical wavelengths (as was required by the technique of the preceding section) at $\theta$ = 29.6° if $R_{32}$ is increased from 0.8050 to 0.8476. In doing so, $M_2$ cannot change because a change in the magnification of the $\lambda_2$ wavelength light scan angle would

effect $R_{12}$ also. Therefore, only $M_3$ may be adjusted. The amount of adjustment in our example is determined by multiplying the magnification ratio 0.8050 by a factor which would bring it to 0.8476, or by 1.053. This can be accomplished by magnifying the scan angle of the $\lambda_3$ beam by 1.053 by placing a "trimming" prism of magnification $M_0 = 1.053$ in the path of that beam.

If the same glass is used for both prisms 26 and 34 then

$$A = \sin^{-1} \left[ \frac{(1.053)^2 - 1}{(1.053^2)(2.1149)^2 - 1} \right]^{1/2} = 9.54° \quad (11)$$

Thus, a trimming prism of apex angle equal to 9.54° in the path of the $\lambda_3$ beam would provide correct additional magnification of one wavelength.

This example illustrates an advantage of the invention. Prism 26 both equalizes the scan angles of $\lambda_1$ and $\lambda_2$ and shortens greatly the optical path required before the beams separate enough to use prism 34.

The invention has been described in detail with particular reference to certain preferred embodiments thereof, but it will be understood that variations and modifications can be effected within the spirit and scope of the invention. For example, additional degrees of freedom can be obtained in matching three wavelength light with the desired prism parameters if the prism is compound, for example, with two prisms of differing dispersive characteristics either cemented together or airspaced.

### INDUSTRIAL APPLICATION

The invention can be used in applications requiring scanning multi-color light. It is particularly usable with discrete wavelength beams of small bandwidth such as those produced by lasers. Accordingly, it can be used in laser color television receivers, laser color printers and laser color copiers.

## CLAIMS

1. Apparatus for deflecting two beams of light of different predetermined wavelengths through substantially the same scan angle, including:

acoustooptic means (10) for deflecting the beams through different scan angles, the scan angle for each beam being proportional to its wavelength, and

optical equalization (26; 26, 34) means for equalizing the scan angles of the beams,

characterized in that the optical equalization means includes prism means (26) in the path of both deflected beams which prism means magnifies the scan angle of each beam by an amount which varies as an inverse function of the wavelength of each beam.

2. Apparatus according to Claim 1 further characterized in that the prism means includes a single prism (26) through which both beams pass, said prism having indexes of refraction $n_1$ and $n_2$ for said predetermined wavelengths, respectively, and an apex angle A and which prism is positioned with its front surface at approximately the same incident angle $\theta$ to both beams, further characterized in that the parameters $n_1$, $n_2$, A and $\theta$ are chosen such that the products of the scan angle magnifications by the prism and the wavelengths of the respective beams are equal.

3. Apparatus according to Claim 2, further characterized in that said apparatus is constructed to deflect a third beam of light of different predetermined wavelength through substantially the same scan angle as the said two beams of light, the said prism having an index of refraction $n_3$ for the third beam, and that the parameters $n_1$, $n_2$, $n_3$, A and $\theta$ are chosen such that the product of the scan angle magnifications by the prism and the wavelengths of the respective beams are equal.

4.    Apparatus according to Claim 2, further characterized in that said apparatus is constructed to deflect a third beam of light of different predetermined wavelength through substantially the same scan angle as the said two beams of light, the said prism having an index of refraction $n_3$ for the third beam, in that the parameters $n_1$, $n_2$, $n_3$, A and $\theta$ are chosen to spatially separate one beam from the other two beams, and in that a second prism (34) is positioned in the optically separated beam to magnify the scan angle of the optically separated beam.

FIG. 1

FIG. 2

DEVIATION Di

$\lambda_1$

$\lambda_1 < \lambda_2$

$\lambda_2$

PRISM INCIDENT ANGLE θ

FIG. 3

FIG. 4

MAGNIFICATION

PRISM APEX ANGLE A (DEGREES)

6328Å

4416Å

MAGNIFICATION

FIG. 5

λ=4416Å

λ=6328Å

INCIDENT ANGLE θ (DEGREES)

FIG. 6

FIG. 7

**EUROPEAN SEARCH REPORT**

0000104

Application number

EP 78 30 0038

| | DOCUMENTS CONSIDERED TO BE RELEVANT | | CLASSIFICATION OF THE APPLICATION (Int. Cl.⁴) |
|---|---|---|---|
| Category | Citation of document with indication, where appropriate, of relevant passages | Relevant to claim | |
| | US - A - 3 524 011 (A.KORPEL a.o.) <br> * Column 12, lines 3-64; figure 7 * <br> --- <br> IBM TECHNICAL DISCLOSURE BULLETIN, vol. 13, nr. 9, february 1971, New York, US <br> B.R.BROWN & S.H.ROWE "Acoustic light deflector chromatic variation compensation", pages 2634-2635 <br> ----- | 1 <br><br><br> 1 | G 02 F 1/33. |

TECHNICAL FIELDS SEARCHED (Int.Cl.²)

G 02 F 1/33
G 02 F 1/31
G 02 F 1/29
H 04 N 9/31
H 04 N 9/14

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search <br> The Hague | Date of completion of the search <br> 19-09-1978 | Examiner <br> ARMITANO-CR VEL |